# FASCICULE DE BREVET EUROPEEN

(11) **EP 1 700 683 B1**
(45) Date de publication et mention de la délivrance du brevet: **09.12.2009**
(21) Numéro de dépôt: 06290396.8
(22) Date de dépôt: 10.03.2006
(51) Int. Cl.: B29C 45/14, B29C 43/36, B29C 43/18

(54) **Moule de fabrication et pièce d'habillage intérieur d'automobile**
Form und innenbekleidungsteil eines Kraftfahrzeugs
Mold and interior lining part of a motor vehicle

(30) Priorité: 11.03.2005 FR 0502424
(43) Date de publication de la demande: 13.09.2006
(73) Titulaire: Faurecia Interieur Industrie, 92000 Nanterre (FR)
(72) Inventeur: Beau, Godefroy, 92250 La Garenne-Colombes (FR)
(74) Mandataire: Neyret, Daniel Jean Marie

(56) Documents cités:
- EP-A- 0 895 846
- DE-C1- 19 958 316
- PATENT ABSTRACTS OF JAPAN vol. 2000, no. 09, 13 octobre 2000 (2000-10-13) & JP 2000 153542 A (INOAC CORP), 6 juin 2000 (2000-06-06)

## Description

La présente invention concerne un moule de fabrication de pièces d'habillage ayant une feuille de décoration portée par un support, ainsi que de telles pièces.

L'habillage intérieur des automobiles comporte souvent des pièces étendues et peu épaisses dans lesquelles une feuille de décoration est apparente sur une partie de la surface. Pour la fabrication de ces pièces, il est nécessaire que les bords de la pièce de décoration soient insérés dans un support rigide. On utilise à cet effet divers procédés dans lesquels une matière plastique est injectée dans un moule d'un côté de la feuille de décoration et au-delà des bords de celle-ci, afin que la matière plastique soit des deux côtés de la feuille près de ces bords. Etant donné que la feuille de décoration est le plus souvent souple, la tenue de ces bords pendant la fabrication pose un problème.

La demande EP-A-0 895 846 décrit un moule selon le préambule de la revendication 1. Le document JP-A-2000153542 décrit une pièce selon le préambule des revendications 5 et 6.

On connaît déjà un procédé de fabrication de pièces d'habillage d'épaisseur faible par rapport aux autres dimensions, comprenant un support de matière plastique revêtu partiellement d'une feuille non rigide de décoration, dans un moule qui délimite une cavité de moulage entre un poinçon et une matrice, le poinçon étant en deux parties mobiles l'une par rapport à l'autre dans la direction de l'épaisseur de la pièce à fabriquer. Ce procédé comprend la disposition de la feuille de décoration sur une première partie de poinçon, un premier déplacement de la seconde partie de poinçon vers une position de serrage d'une partie de feuille, destinée à constituer un bord, contre la première partie de poinçon, la fermeture de la matrice, l'injection partielle de matière plastique dans une première partie de cavité de moulage comprise entre la feuille de décoration et la première partie de poinçon, sans injection dans la seconde partie de cavité de moulage comprise entre la seconde partie de poinçon et la matrice, un second déplacement de la seconde partie de poinçon afin qu'elle coupe le bord de feuille en coopération avec la première partie de poinçon, et forme un dispositif de mise en communication de la première et de la seconde partie de cavité de moulage, ce dispositif de mise en communication comprenant la formation de trous dans la feuille de décoration, en-deçà du bord coupé, puis la poursuite de l'injection afin que la matière plastique injectée pénètre dans la seconde partie de cavité de moulage, par les trous formés dans la feuille.

On conçoit que ce procédé pose des problèmes délicats. En effet, il est d'abord nécessaire de tenir la feuille par serrage, puis simultanément d'en couper le bord et de former des trous qui la traversent. Ces opérations simultanées s'effectuent dans deux plans qui sont à des distances différentes de la surface de la pièce, si bien que les parties de poinçon utilisées doivent respecter des tolérances serrées. En outre, si l'épaisseur de la pièce varie ou est différente, il est nécessaire d'utiliser un autre moule.

Ce procédé pose alors des problèmes de formation de défauts à l'interface de la feuille de décoration et du support, tels que l'apparition d'une partie coupée de la feuille de décoration ou la formation d'ondulations au raccord entre la feuille de décoration et le support.

L'invention a pour objet la fabrication de pièces d'habillage par un procédé du type général précité, mais qui ne nécessite pas une découpe de la feuille de décoration dans deux plans différents et qui, surtout, permet la fabrication de pièces d'habillage possédant des feuilles de décoration dont l'épaisseur ou d'autres caractéristiques peuvent varier sans qu'il soit nécessaire de changer de moule.

A cet effet, l'invention met en oeuvre un moule de caractéristiques particulières et permet ainsi l'obtention de pièces d'habillage spécifiques.

Plus précisément, l'invention concerne un moule de fabrication d'une pièce d'habillage d'épaisseur faible par rapport à ses autres dimensions, la pièce comprenant un support de matière plastique revêtu partiellement d'une feuille non rigide de décoration, du type qui comprend un poinçon en deux parties et une matrice, une seconde partie de poinçon étant mobile par rapport à une première partie de poinçon dans une direction sensiblement perpendiculaire à l'épaisseur de la pièce à fabriquer, en prenant, lors d'un cycle de fabrication d'une pièce, les trois positions relatives suivantes : une première position dans laquelle les deux parties de poinçon délimitent entre elles un passage large pour le positionnement de la feuille de décoration sur une première partie de poinçon, une seconde position dans laquelle la seconde partie de poinçon serre la feuille de décoration sur la première partie de poinçon, et une troisième position dans laquelle les deux parties de poinçon sont en contact par des bords coopérants de coupure formant une ligne continue de coupure de la feuille. Selon l'invention, à proximité du bord de coupure du côté de la cavité de moulage, les surfaces adjacentes des première et seconde parties de poinçon à la troisième position sont discontinues dans un plan perpendiculaire à la direction de l'épaisseur, de sorte qu'elles forment des canaux séparés par des saillies, et, sauf à leur ligne continue de contact à la troisième position ou à son voisinage, les deux parties de poinçon sont toujours séparées par une distance au moins égale à l'épaisseur de la feuille de décoration à l'état comprimé.

Dans un mode d'exécution, à la troisième position, les saillies de la première partie de poinçon sont en face de saillies de la seconde partie de poinçon de sorte que, du fait de la coupure du bord de feuille, les canaux de la première partie de poinçon communiquent avec les canaux de la seconde partie de poinçon.

Dans un autre mode d'exécution, à la troisième position, les saillies de la première partie de poinçon sont en face de canaux de la seconde partie de poinçon, les saillies étant moins larges que les canaux, de sorte que les canaux de la première partie de poinçon communiquent avec les canaux de la seconde partie de poinçon sans que les saillies de la première partie de poinçon soient directement en face de saillies de la seconde partie de poinçon, les surfaces enveloppes des saillies des deux parties de poinçon étant séparées par une distance inférieure ou égale à l'épaisseur de la feuille de décoration à l'état comprimé. Dans ce dernier cas, la distance séparant les surfaces enveloppes peut être pratiquement nulle.

L'invention concerne aussi une pièce d'habillage d'épaisseur faible par rapport à ses autres dimensions, comprenant un support de matière plastique revêtu partiellement d'une feuille non rigide de décoration, et qui comporte, du côté opposé à la partie apparente de la feuille de décoration et à l'aplomb pratiquement du bord de la feuille de décoration, une protubérance pratiquement continue qui présente des saillies allongées dans la direction de l'épaisseur de la pièce, les saillies étant présentes des deux côtés de la protubérance, telles que les saillies d'un côté de la protubérance sont en face des saillies de l'autre côté de celle-ci.

Dans un autre mode de réalisation, les saillies d'un côté de la protubérance sont décalées par rapport à celles de l'autre côté et ont des parties en regard.

Ainsi, le moule selon l'invention permet d'éviter les problèmes de défauts à l'interface de la feuille de décoration et du support, tels que l'apparition d'une partie coupée de la feuille de décoration ou la formation d'ondulations au raccord entre la feuille de décoration et le support.

D'autres caractéristiques et avantages de l'invention seront mieux compris à la lecture de la description qui va suivre d'exemples de réalisation, faite en référence aux dessins annexés sur lesquels :
la figure 1 est une vue générale d'un exemple de pièces d'habillage ayant une partie de feuille de décoration apparente ;
les figures 2 à 6 illustrent les étapes successives du procédé connu de fabrication ;
la figure 7 est une coupe transversale d'une pièce obtenue avec le procédé connu ;
les figures 8 à 11 illustrent des étapes du procédé mis en oeuvre avec le moule selon l'invention ;
la figure 12 est une coupe transversale d'une partie de la figure 11, suivant la ligne A-A ;
la figure 13 est une coupe transversale d'une pièce obtenue selon l'invention ; et
les figures 14 et 15 sont des coupes transversales de la pièce représentée sur la figure 13, dans deux modes différents de réalisation de moules d'injection.

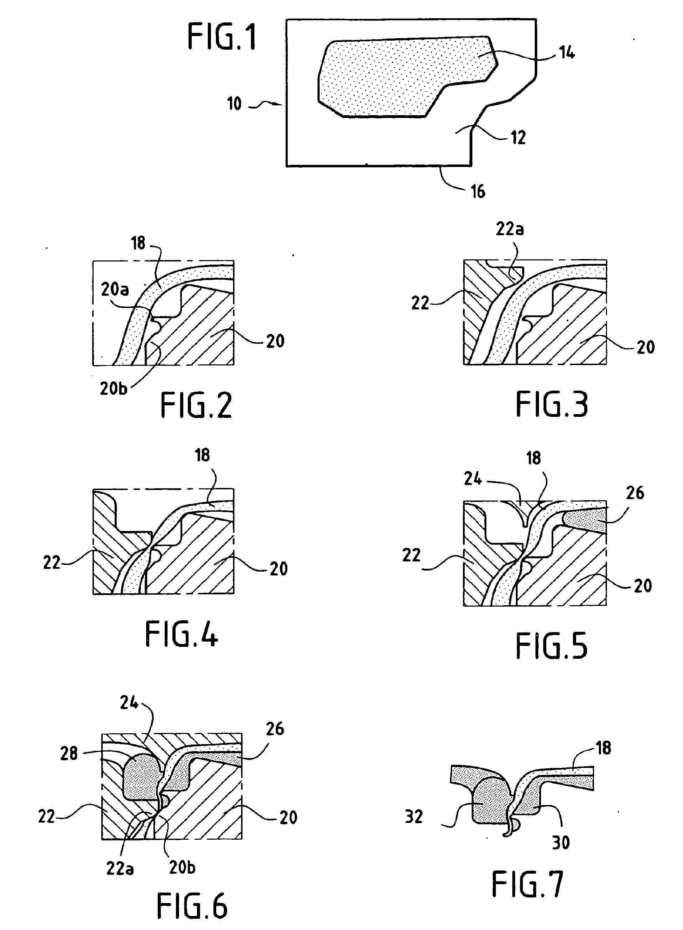

La figure 1 est une vue en élévation latérale d'une pièce d'habillage du type qui peut être fabriquée selon l'invention. Cette pièce 10 comporte essentiellement un support 12 de matière plastique rigide, ayant une feuille de décor 14 qui apparaît sur une partie de la surface, à l'intérieur d'un contour 16. Dans la direction de l'épaisseur, c'est-à-dire perpendiculairement au plan de représentation de la figure 1, l'épaisseur de la pièce d'habillage est très réduite. Dans un exemple, la feuille de décoration peut être constituée d'un tissu, d'un non-tissé, de cuir, de simili-cuir ou d'une autre feuille, et le support rigide 10 peut être constitué par exemple d'une polyoléfine, notamment de polypropylène.

Les figures 2 à 6 représentent des étapes successives d'un procédé connu de fabrication de telles pièces. Comme l'indique la figure 2, dans une étape initiale, la feuille de décoration 18 est placée sur un poinçon 20. On note que ce poinçon 20 possède des saillies locales 20a, dont le rôle est décrit dans la suite, et un bord de coupure 20b au niveau duquel la feuille 18 est destinée à être coupée. A ce moment, une seconde partie de poinçon 22 est distante de la première partie de poinçon 20, et occupe ainsi une première position.

Ensuite, la seconde partie de poinçon 22 est déplacée vers une seconde position par rapport à la première partie de poinçon 20, comme indiqué sur la figure 4. La figure 3 représente une étape intermédiaire dans laquelle la seconde partie de poinçon 22 se rapproche progressivement de la première partie de poinçon 20 en se déplaçant suivant un axe qui est vertical sur les figures 2 à 6. Cette seconde partie de poinçon 22 a un bord de coupure 22a dont le rôle est décrit dans la suite.

A la suite de ce premier déplacement de la seconde partie de poinçon 22 par rapport à la première partie de poinçon 20, une partie de la feuille 18 est serrée entre les saillies 20a de la première partie de poinçon 20 et la face latérale de la seconde partie de poinçon 22 au niveau du bord de coupure. Cependant, la feuille est simplement comprimée entre les saillies et la surface latérale et n'est pas percée.

Dans cette position relative des deux parties de poinçon, la matrice 24 est placée sur le moule et de la matière plastique fondue 26 destinée à former le support de la pièce est injectée partiellement, par exemple aux trois quarts du volume nécessaire seulement. De cette manière, elle n'occupe qu'une partie de cavité comprise entre la première partie de poinçon 20 et la feuille 18 tenue par la matrice 24.

Ensuite, la seconde partie de poinçon 22 subit un second déplacement qui met en contact les deux bords de coupure 20b et 22a, si bien que la feuille de décoration est coupée suivant une ligne continue, et, simultanément, les saillies 20a sont mises en position de pénétration du matériau de la feuille 18 avec formation d'orifices. Le reste de la matière plastique du support est alors injecté si bien que cette matière remplit la totalité de l'espace compris entre la première partie de poinçon 22 et la feuille de décoration 18 et passe par les trous formés par les saillies 20a pour constituer une masse de matière plastique 28 qui vient remplir la seconde partie de cavité de moulage formée entre la matrice et la seconde partie de poinçon 22.

A la fin de cette opération, on obtient une pièce qui, en coupe, est telle que représentée sur la figure 7. Sur cette figure, on note que la feuille de décoration 18 est portée par un support qui comprend une première partie 30 et une seconde partie 32 reliées l'une à l'autre par des ponts formés par la matière injectée qui est passée dans les trous formés par les saillies 20a. Comme la distance comprise entre la saillie 20a et la partie la plus proche de la matrice 24 est faible, il peut arriver que, pendant la seconde injection, une partie de feuille 18 qui a été traversée par la saillie 20a soit chassée vers le haut et apparaisse à l'interface de la feuille 18 et de la seconde partie de support 32. Ceci constitue un premier défaut.

On note donc que le procédé précité nécessite le respect de tolérances serrées bien adaptées à la nature et à l'épaisseur de la feuille de décoration 18. En effet, si l'épaisseur de la feuille de décoration diminue, la tenue de la feuille est moins bonne entre les deux parties de poinçon. En particulier, s'il existe une faible variation d'épaisseur de la feuille aux parties du contour 16, le bord peut être plus ou moins bien tenu et peut alors faire apparaître des plis à l'interface de la feuille et du support. Ceci constitue un second défaut.

En outre, il est nécessaire que le dernier déplacement de la seconde partie de poinçon par rapport à la première partie de poinçon assure à la fois la découpe totale du bord de la feuille de décoration et le percement d'une série de trous tout le long du contour pour le passage de la matière plastique. On conçoit que ces deux opérations simultanées nécessitent aussi le respect de tolérances serrées, aussi bien pour les parties de poinçon que pour la feuille de décoration.

L'invention évite ces inconvénients par utilisation d'un moule qui évite la formation des trous pour le passage de la matière fondue, et qui, au contraire, assure le passage de la première partie de cavité à la seconde autour du bord de la feuille de décoration qui vient d'être coupée.

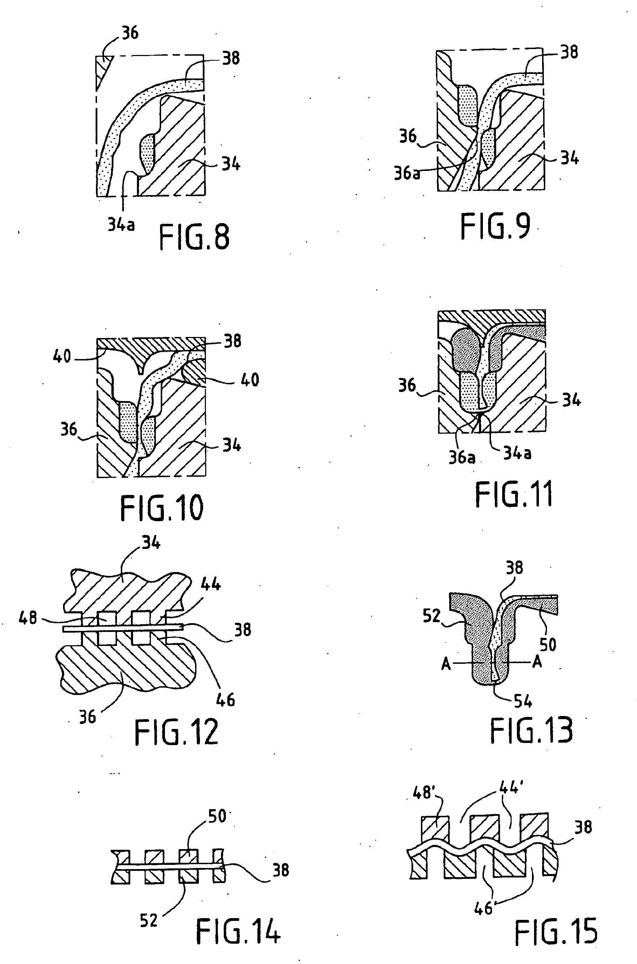

Plus précisément, comme l'indique les figures 8 à 11, dans une première position, la feuille de décoration 38 est placée sur une première partie de poinçon 34 qui possède un bord continu de coupure 34a.

Ensuite, la seconde partie de poinçon 36 qui a un bord de coupure 36a est déplacée vers la première partie de poinçon 34 afin que la feuille de décoration 38 soit serrée entre les faces latérales de la première partie 34 et de la seconde partie 36 de poinçon, dont la forme est décrite plus en détail en référence à la figure 12. Sur cette figure, on note que, dans une partie de serrage qui se trouve au-dessus des deux bords de coupe, comme indiqué sur la figure 10, la feuille de décoration 38 est tenue entre des saillies 44 de la première partie de poinçon 34 et des saillies 46 de la seconde partie de poinçon 36. Des canaux 48 de passage de matière plastique fondue injectée sont formés entre les saillies 44, et d'autres passages ou canaux sont formés entre les saillies 46.

Après qu'une partie de la matière plastique fondue du support a été injectée comme l'indique la référence 40 sur la figure 10, la seconde partie de poinçon 36 est déplacée à nouveau par rapport à la première partie de poinçon 34 afin que les deux bords de coupure 34a et 36a coopèrent et coupent le bord de la feuille 38 suivant une ligne continue de coupure. Comme cette feuille de décoration n'est tenue que par les saillies en regard 44 et 46, elle est libre de se déformer dans les canaux 48 et permet donc le passage de la matière plastique injectée, autour du bord inférieur de la feuille 38.

La figure 13 représente en coupe la pièce d'habillage qui est obtenue. La feuille de décoration 38 est supportée par une partie intérieure 50 de support et son bord est tenu entre une joue de cette partie intérieure 50 et une joue antagoniste d'une partie extérieure de support 52. Les deux parties de support 50, 52 sont reliées par la matière plastique 54 qui passe autour du bord inférieur de la feuille 38.

Dans ce procédé, comme aucune coupe n'est réalisée en position intermédiaire, un bord de feuille ne risque pas d'apparaître dans la gorge comprise entre la feuille de décoration 38 et la seconde partie de support 52. En outre, comme la feuille est tenue sur une grande hauteur entre les joues des deux parties de support 50, 52, elle ne risque pas de former des plis ou ondulations.

On a décrit un mode de réalisation dans lequel les saillies 44 de la première partie de poinçon 34 et les saillies 46 de la seconde partie de poinçon 46 sont en regard et délimitent entre elles une distance correspondant à l'épaisseur comprimée de la feuille de décoration, afin que celle-ci soit tenue. En conséquence, la pièce obtenue, dans la protubérance formée du côté opposé à la face apparente, a une forme en coupe telle qu'indiquée sur la figure 14. Sur celle-ci, des saillies des deux côtés de la feuille 38 sont en regard.

Dans une variante de l'invention, mettant en oeuvre la grande longueur de tenue de la feuille de décoration dans la direction de l'épaisseur entre les saillies des deux parties de poinçon, ces parties de poinçon peuvent avoir des saillies de largeur réduite et décalées sur les deux parties de poinçon. Cette variante est illustrée par la figure 15. Dans cette variante, les saillies 44' d'une première partie de poinçon et les saillies 46' d'une seconde partie de poinçon ont une largeur inférieure à celle des canaux adjacents tels que 48', et les saillies sont placées en face des canaux. De cette manière, les deux parties de poinçon peuvent être séparées par un espace inférieur à l'épaisseur de la feuille à l'état comprimé. La feuille suit donc un trajet sinueux. Ces sinuosités permettent la compensation de petites variations d'épaisseur de la feuille 38. Dans la pièce obtenue, les saillies formées par la matière des canaux tels que 48' sont décalées de part et d'autre de la protubérance inférieure de la pièce d'habillage.

Ainsi, l'invention évite les deux types de défauts de la technique antérieure, et permet d'utiliser des moules avec des plages de tolérances moins étroites que dans la technique antérieure.

## Revendications

1. Moule de fabrication d'une pièce d'habillage d'épaisseur faible par rapport à ses autres dimensions, la pièce comprenant un support de matière plastique revêtu partiellement d'une feuille non rigide de décoration,
du type qui comprend un poinçon en deux parties et une matrice, une seconde partie de poinçon (36) étant mobile par rapport à une première partie de poinçon (34) dans une direction sensiblement perpendiculaire à l'épaisseur de la pièce à fabriquer, en prenant, lors d'un cycle de fabrication d'une pièce, les trois positions relatives suivantes :
une première position dans laquelle les deux parties de poinçon (34, 36) délimitent entre elles un passage large pour le positionnement de la feuille de décoration (38) sur une première partie de poinçon,
une seconde position dans laquelle la seconde partie de poinçon (36) serre la feuille de décoration sur la première partie de poinçon (34), et
une troisième position dans laquelle les deux parties de poinçon (34, 36) sont en contact par des bords coopérants de coupure formant une ligne continue de coupure de la feuille,
**caractérisé en ce que**
à proximité du bord de coupure du côté de la cavité de moulage, les surfaces adjacentes des première et seconde parties de poinçon (34, 36) à la troisième position sont discontinues dans un plan perpendiculaire à la direction de l'épaisseur, de sorte qu'elles forment des canaux (48) séparés par des saillies (44, 46), et,
sauf à leur ligne continue de contact à la troisième position ou à son voisinage, les deux parties de poinçon (34, 36) sont toujours séparées par une distance au moins égale à l'épaisseur de la feuille de décoration (38) à l'état comprimé.

2. Moule selon la revendication 1, **caractérisé en ce que**, à la troisième position, les saillies (44) de la première partie de poinçon (34) sont en face de saillies (46) de la seconde partie de poinçon (36) de sorte que, du fait de la coupure du bord de feuille, les canaux de la première partie de poinçon communiquent avec les canaux de la seconde partie de poinçon.

3. Moule selon la revendication 1, **caractérisé en ce que**, à la troisième position, les saillies (44') de la première partie de poinçon sont en face de canaux de la seconde partie de poinçon, les saillies étant moins larges que les canaux, de sorte que les canaux de la première partie de poinçon communiquent avec les canaux de la seconde partie de poinçon sans que les saillies de la première partie de poinçon soient directement en face de saillies (46') de la seconde partie de poinçon, les surfaces enveloppes des saillies des deux parties de poinçon étant séparées par une distance inférieure ou égale à l'épaisseur de la feuille de décoration à l'état comprimé.

4. Moule selon l'une quelconque des revendications précédentes, **caractérisé en ce que** la distance séparant les surfaces enveloppes est pratiquement nulle.

5. Pièce d'habillage d'épaisseur faible par rapport à ses autres dimensions, comprenant un support (50, 52) de matière plastique revêtu partiellement d'une feuille non rigide de décoration (38), telle qu'elle comporte, du côté opposé à la partie apparente de la feuille de décoration (38) et à l'aplomb pratiquement du bord de la feuille de décoration, une protubérance pratiquement continue qui présente des saillies allongées dans la direction de l'épaisseur de la pièce, **caractérisée en ce que** les saillies sont présentes des deux côtés de la protubérance, et **en ce que** les saillies d'un côté de la protubérance sont en face des saillies de l'autre côté de celle-ci.

6. Pièce d'habillage d'épaisseur faible par rapport à ses autres dimensions, comprenant un support (50, 52) de matière plastique revêtu partiellement d'une feuille non rigide de décoration (38), telle qu'elle comporte, du côté opposé à la partie apparente de la feuille de décoration (38) et à l'aplomb pratiquement du bord de la feuille de décoration, une protubérance pratiquement continue qui présente des saillies allongées dans la direction de l'épaisseur de la pièce, **caractérisée en ce que** les saillies (48') sont présentes des deux côtés de la protubérance, et **en ce que** les saillies d'un côté de la protubérance sont décalées par rapport à celles de l'autre côté et ont des parties en regard.

## Claims

1. Mould for manufacture of a piece of trim of low thickness relative to its other dimensions, the piece comprising a support of plastic material partially covered by a non-rigid decorative sheet,
of a type which comprises a punch of two parts and a die, a second part of the punch (36) being movable relative to a first part of the punch (34) in a direction substantially perpendicular to the thickness of the piece to be manufactured, taking up, in the course of a manufacturing cycle for a piece, the following three relative positions:
a first position, in which the two parts of the punch (34, 36) delimit between them a wide passage for positioning of the decorative sheet (38) on a first part of the punch,
a second position, in which the second part of the punch (36) clamps the decorative sheet against the first part of the punch (34), and
a third position, in which the two parts of the punch (34, 36) are in contact by co-operating cutting edges forming a continuous sheet-cutting line,
**characterised in that**
in proximity to the cutting edge, on the mould cavity side, the adjacent surfaces of the first and second parts of the punch (34, 36) in the third position are discontinuous in a plane perpendicular to the thickness direction so that they form channels (48) separated by projections (44, 46), and,
except at their continuous line of contact in the third position or in the vicinity thereof, the two parts of the punch (34, 36) are always separated by a distance at least equal to the thickness of the decorative sheet (38) in the compressed state.

2. Mould according to claim 1, **characterised in that**, in the third position, the projections (44) of the first part of the punch (34) are located opposite projections (46) of the second part of the punch (36) so that, as a result of cutting of the sheet edge, the channels of the first part of the punch are in communication with the channels of the second part of the punch.

3. Mould according to claim 1, **characterised in that**, in the third position, the projections (44') of the first part of the punch are located opposite channels of the second part of the punch, the projections being less wide than the channels, so that the channels of the first part of the punch are in communication with the channels of the second part of the punch without the projections of the first part of the punch being located directly opposite projections (46') of the second part of the punch, the envelope surfaces of the projections of the two parts of the punch being separated by a distance less than or equal to the thickness of the decorative sheet in the compressed state.

4. Mould according to any one of the preceding claims, **characterised in that** the distance separating the envelope surfaces is practically zero.

5. Piece of trim of low thickness relative to its other dimensions, comprising a support (50, 52) of plastic material partially covered by a non-rigid decorative sheet (38), said piece being such that it has, on the opposite side to the visible part of the decorative sheet (38) and practically in plumb with the edge of the decorative sheet, a practically continuous protuberance which has projections extending in the thickness direction of the piece, **characterised in that** the projections are present on the two sides of the protuberance, and **in that** the projections on one side of the protuberance are located opposite the projections on the other side of the latter.

6. Piece of trim of low thickness relative to its other dimensions, comprising a support (50, 52) of plastic material partially covered by a non-rigid decorative sheet (38), said piece being such that it has, on the opposite side to the visible part of the decorative sheet (38) and practically in plumb with the edge of the decorative sheet, a practically continuous protuberance which has projections extending in the thickness direction of the piece, **characterised in that** the projections (48') are present on the two sides of the protuberance, and **in that** the projections on one side of the protuberance are offset with respect to those on the other side and have portions facing each other.

## Patentansprüche

1. Form zur Herstellung eines Verkleidungsstücks mit geringer Dicke im Vergleich zu seinen anderen Abmessungen, wobei das Stück einen Kunststoffträger enthält, der teilweise mit einer nicht-starren Dekorfolie überzogen ist,
des Typs, der einen zweiteiligen Stempel und eine Matrize umfasst, wobei ein zweiter Stempelteil (36) in Bezug auf einen ersten Stempelteil (34) in einer Richtung beweglich ist, die im Wesentlichen senkrecht zur Dicke des zu fertigenden Stücks ist, wobei er während des Fertigungszyklus eines Stücks die folgenden drei Relativpositionen einnimmt:
eine erste Position, in der die zwei Stempelteile (34, 36) zwischen sich einen großen Durchtritt für die Positionierung der Dekorfolie (38) auf einem ersten Stempelteil begrenzen,
eine zweite Position, in der der zweite Stempelteil (36) die Dekorfolie auf dem ersten Stempelteil (34) festklemmt, und
eine dritte Position, in der die zwei Stempelteile (34, 36) an den zusammenwirkenden Schneidkanten miteinander in Kontakt stehen, wobei sie eine durchgehende Schnittlinie der Folie ausbilden,
**dadurch gekennzeichnet, dass**
in der Nähe der Schneidkante auf der Seite des Formhohlraums der Abformung die benachbarten Flächen des ersten und des zweiten Stempelteils (34, 36) in der dritten Position in einer zur Richtung der Dicke senkrechten Ebene unterbrochen sind, so dass sie Kanäle (48) bilden, die durch Vorsprünge (44, 46) getrennt sind, und
die zwei Stempelteile (34, 36) außer an ihrer durchgehenden Kontaktlinie in der dritten Position oder in deren Nähe immer durch einen Abstand getrennt sind, der wenigstens gleich der Dicke der Dekorfolie (38) im zusammengedrückten Zustand ist.

2. Form nach Anspruch 1, **dadurch gekennzeichnet, dass** in der dritten Position die Vorsprünge (44) des ersten Stempelteils (34) gegenüber den Vorsprüngen (46) des zweiten Stempelteils (36) liegen, derart, dass auf Grund des Schnitts der Folienkante die Kanäle des ersten Stempelteils mit den Kanälen des zweiten Stempelteils in Verbindung stehen.

3. Form nach Anspruch 1, **dadurch gekennzeichnet, dass** in der dritten Position die Vorsprünge (44') des ersten Stempelteils sich gegenüber von Kanälen des zweiten Stempelteils befinden, wobei die Vorsprünge kleiner als die Kanäle sind, so dass die Kanäle des ersten Stempelteils mit den Kanälen des zweiten Stempelteils in Verbindung stehen, ohne dass die Vorsprünge des ersten Stempelteils den Vorsprüngen (46') des zweiten Stempelteils direkt gegenüberliegen, wobei die Hüllflächen der Vorsprünge der zwei Stempelteile durch einen Abstand voneinander getrennt sind, der kleiner oder gleich der Dicke der Dekorfolie im zusammengedrückten Zustand ist.

4. Form nach einem der vorhergehenden Ansprüche, **dadurch gekennzeichnet, dass** der Abstand, der die Hüllflächen voneinander trennt, praktisch Null ist.

5. Verkleidungsstück mit geringer Dicke im Vergleich zu seinen anderen Abmessungen, enthaltend einen Träger (50, 52) aus Kunststoff, der teilweise mit einer nicht-starren Dekorfolie (38) überzogen ist, wobei es auf der dem sichtbaren Teil der Dekorfolie (38) gegenüberliegenden Seite und praktisch lotrecht zur Kante der Dekorfolie eine praktisch durchgehende Ausstülpung aufweist, die längliche Vorsprünge in der Richtung der Dicke des Stücks aufweist, **dadurch gekennzeichnet, dass** die Vorsprünge auf beiden Seiten der Ausstülpung vorhanden sind, und dadurch, dass die Vorsprünge auf einer Seite der Vorstülpung den Vorsprüngen auf deren anderer Seite gegenüberliegen.

6. Verkleidungsstück mit geringer Dicke im Vergleich zu seinen anderen Abmessungen, enthaltend einen Träger (50, 52) aus Kunststoff, der teilweise mit einer nicht-starren Dekorfolie (38) überzogen ist, wobei es auf der dem sichtbaren Teil der Dekorfolie (38) gegenüberliegenden Seite und praktisch lotrecht zur Kante der Dekorfolie eine praktisch durchgehende Ausstülpung aufweist, die längliche Vorsprünge in der Richtung der Dicke des Stücks aufweist, **dadurch gekennzeichnet, dass** die Vorsprünge (48') auf beiden Seiten der Ausstülpung vorhanden sind, und dadurch, dass die Vorsprünge auf einer Seite der Vorstülpung in Bezug auf diejenigen auf der anderen Seite versetzt sind und gegenüberliegende Teile aufweisen.
